(19) Europäisches Patentamt
European Patent Office
Office européen des brevets

(11) Veröffentlichungsnummer: **0 201 807**
**B1**

# (12) EUROPÄISCHE PATENTSCHRIFT

(45) Veröffentlichungstag der Patentschrift: **13.09.89**

(51) Int. Cl.[4]: **C07F 9/09**, C07F 9/165, C07F 9/24, C07F 9/40, C07C 147/02, A01N 57/02

(21) Anmeldenummer: **86105974.9**

(22) Anmeldetag: **30.04.86**

(54) **Oximinophosphorsäurederivate, Verfahren zu ihrer Herstellung und ihre Verwendung zur Bekämpfung von Schädlingen.**

(30) Priorität: **07.05.85 DE 3516281**

(43) Veröffentlichungstag der Anmeldung: **20.11.86 Patentblatt 86/47**

(45) Bekanntmachung des Hinweises auf die Patenterteilung: **13.09.89 Patentblatt 89/37**

(84) Benannte Vertragsstaaten: **AT BE CH DE FR GB IT LI NL**

(56) Entgegenhaltungen:
**EP-A- 0 074 047**
**EP-A- 0 150 822**
**US-A- 3 551 529**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Buerstinghaus, Rainer, Dr., Roentgenstrasse 38, D-6900 Heidelberg(DE)**
Erfinder: **Kiehs, Karl, Dr., Sudetenstrasse 22, D-6840 Lampertheim(DE)**
Erfinder: **Adolphi, Heinrich, Dr., Kalmitweg 11, D-6703 Limburgerhof(DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Oximinophosphorsäurederivate, Verfahren zu ihrer Herstellung, Schädlingsbekämpfungsmittel, die diese Phosphorsäurederivate als Wirkstoffe erhalten, sowie ein Verfahren zur Bekämpfung von Schädlingen mit diesen Wirkstoffen.

Oximinophosphorsäurederivate sind aus der DE-AS 1 052 981, der DE-AS 1 238 902, der DE-OS 2 304 848, der DE-OS 2 952 738, der DE-OS 3 135 182 und der DE-OS 3 302 969 bekannt. Sie eignen sich zur Bekämpfung von Insekten und Spinnentieren. Ihre Wirkung ist jedoch speziell bei geringer Konzentration nicht immer ganz zufriedenstellend.

In US-A 3 551 529 ist die Verbindung 2-Methyl-2-methylsulfonyl-0-(0,0-diethylphosphoryl)propionaldoxim in Spalte 3, Zeilen 26 und 27 spekulativ genannt worden. Die Synthese dieser Verbindung gelingt weder nach der in dieser Schrift angegebenen allgemeinen Herstellvorschrift noch nach anderen dem Fachmann geläufigen Arbeitsmethoden der organischen Chemie (vgl. auch T. Mukaiyama und H. Nambu in J. Org. Chem. 1962, 27, 2201ff., insbesondere Seite 2202, linke Spalte, Absatz 1).

Es wurde gefunden, daß Oximinophosphorsäurederivate der Formel I

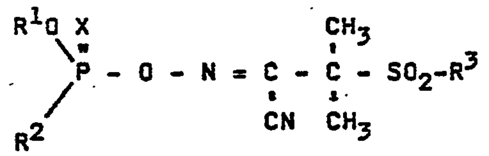 (I),

in der

$R^1$ eine unverzweigte oder verzweigte Alkylgruppe mit bis zu 4 Kohlenstoffatomen,
$R^2$ eine unverzweigte oder verzweigte Alkoxy- oder Alkylthiogruppe mit bis zu 4 Kohlenstoffatomen, eine unverzweigte oder verzweigte Alkylgruppe mit bis zu 3 Kohlenstoffatomen, Phenyl, die Aminogruppe oder einen unverzweigten oder verzweigten Alkylamino- oder Dialkylaminorest mit jeweils bis zu 4 Kohlenstoffatomen je Alkylgruppe,
$R^3$ Methyl oder Ethyl,
X Sauerstoff oder Schwefel bedeuten
insektizid, akarizid und nematizid sehr gut wirksam und bekannten Wirkstoffen ähnlicher Struktur bzw. gleicher Wirkungsrichtung überlegen sind.

In der vorstehenden allgemeinen Formel bedeutet
$R^1$ bevorzugt Methyl, Ethyl,
$R^2$ bevorzugt Methoxy, Ethoxy, n-Propylthio, i-Butylthio, sec.-Butylthio, Isopropylamino,
X bevorzugt S.

Besonders bevorzugt sind die folgenden Kombinationen von $R^1$, $R^2$ und X:
wenn $R^1$ Methyl, Ethyl,
dann $R^2$ Methoxy, Ethoxy
und X S.

Die Oximinophosphorsäurederivate der Formel I können erhalten werden, indem man α-Oximinonitrile der Formel II

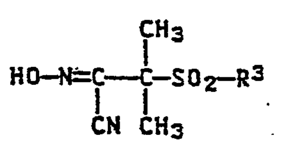 (II),

in der $R^3$ die vorgenannte Bedeutung hat, vorzugsweise in Gegenwart eines Säureacceptors oder Alkalimetall-, Erdalkalimetall- oder gegebenenfalls substituierte Ammoniumsalze dieser α-Oximinonitrile mit einem entsprechenden (Thio)(Thiol)Phosphor(Phosphon)säureester(amid)-halogenid der Formel III

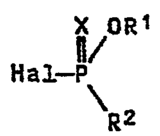 (III),

in der Hal für Halogen steht und X sowie die Reste $R^1$ und $R^2$ die vorgenannte Bedeutung haben, gegebenenfalls in Gegenwart eines Lösungs- oder Verdünnungsmittels bei Temperaturen zwischen 0 und 120°C gemäß der nachfolgenden Reaktionsgleichung umsetzt:

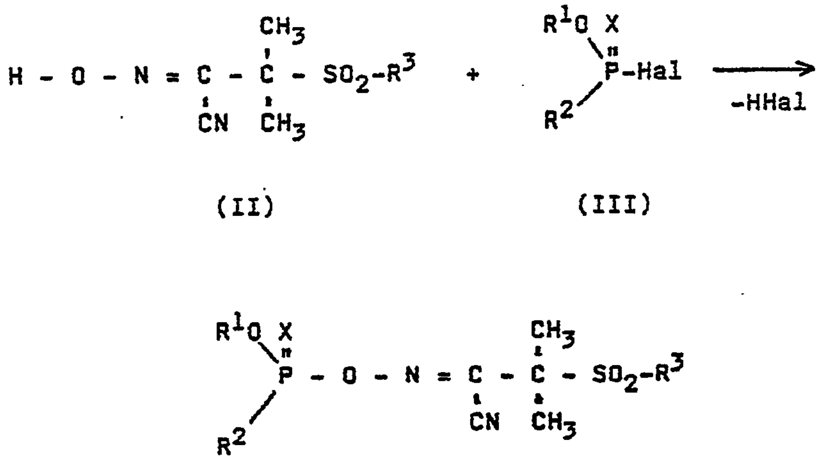


(II) (III)

(I)

Hal(ogen) bedeutet aus wirtschaftlichen Gründen vorzugsweise ein Chloratom.

Die Umsetzung wird zweckmäßigerweise in einem Lösungs- oder Verdünnungsmittel ausgeführt. Hierzu sind beispielsweise geeignet: aliphatische und aromatische, gegebenenfalls chlorierte Kohlenwasserstoffe, wie Petrolether, Benzol, Toluol, Xylol, Benzin, Dichlormethan, Chloroform, Tetrachlormethan, 1,2-Dichlorethan, Chlorbenzol, wie Diethyl- und Di-n-butylether, Methyl-tert.-butylether, Tetrahydrofuran, Dioxan; Ketone, beispielsweise Aceton, Methylethylketon, Methylisopropylketon; ferner Nitrile, wie Acetonitril und Propionitril. Auch Gemische dieser Stoffe können als Lösungs- oder Verdünnungsmittel verwendet werden.

Als Säurebindemittel (Säureacceptoren) eignen sich die bei der Phosphorylierung von Hydroxyverbindungen üblichen basischen Mittel. Besonders geeignet sind Alkalimetallcarbonate oder -alkoholate, wie Natrium- und Kaliumcarbonat, -methylat und -ethylat, ferner aliphatische, aromatische und heterocyclische Amine, z.B. Triethylamin, Dimethylamin, Piperidin, Dimethylanilin, Dimethylbenzylamin und Pyridin. In einigen Fällen ist die Verwendung von Alkyllithiumverbindungen, z.B. n-Butyllithium oder Alkalimetallhydriden, z.B. Natriumhydrid vorteilhaft.

Anstelle des Zusatzes eines Säureacceptors kann man auch von der Umsetzung die Salze der α-Oximinonitrile (II), etwa die Alkalimetall-, Erdalkalimetall- oder Ammoniumsalze herstellen und diese umsetzen.

Üblicherweise setzt man die Ausgangsstoffe in stöchiometrischem Verhältnis ein. Ein Überschuß des einen oder anderen Ausgangsstoffs kann in Einzelfällen aber durchaus vorteilhaft sein.

Die Umsetzung verläuft gewöhnlich oberhalb von Raumtemperatur mit ausreichender Geschwindigkeit. 120°C müssen i.a. nicht überschritten werden. Da die Reaktion in einigen Fällen unter Wärmeentwicklung verläuft, kann es von Vorteil sein, eine Kühlmöglichkeit vorzusehen.

Aus dem Reaktionsgemisch wird der erfindungsgemäße Wirkstoff in üblicher Weise gewonnen, z.B. durch Versetzen mit Wasser, Trennen der Phasen und Destillation und/oder Säulenchromatographie.

Die zur Herstellung von Verbindungen der Formel (I) als Ausgangsmaterialien verwendeten α-Oximinonitrile der Formel (II) sind neue Stoffe.

Sie lassen sich aber in an sich bekannter Weise (DE-AS 1 567 147) durch Chlorieren der zugehörigen 2-Methyl-2-alkylsulfonylpropionaldoxime der Formel IV (Synthese: vgl. J. A. Durden et al., J. Agr. Food Chem. 18, 454ff. (1970)) und anschließende Umsetzung mit Natrium- oder Kaliumcyanid gemäß folgendem Reaktionsschema herstellen:

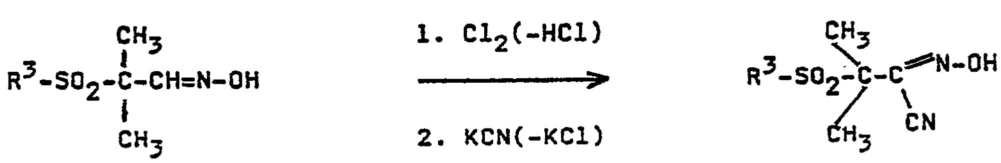


(IV) (II)

Die zur Synthese der Verbindungen der Formel I außerdem benötigten (Thio) (Thiol)Phosphor(Phosphon)säureester(amid)halogenide III sind aus Houben-Weyl, Methoden der organischen Chemie, Band

XII/2, S. 274 ff. (Stuttgart 1964) bekannt und lassen sich auf den dort beschriebenen Synthesewegen herstellen.

Die neuen Verbindungen der Formel I fallen teilweise in Form farbloser oder schwach bräunlich gefärbter Öle an, die sich durch längeres Erwärmen unter vermindertem Druck auf mäßig erhöhte Temperatur ("Andestillieren") von den letzten flüchtigen Anteilen befreien und auf diese Weise reinigen lassen. Sind die Verbindungen der Formel I kristallin, so kann ihre Reinigung durch Umkristallisation erfolgen.

Da die Verbindungen der Formel I meist als Gemische strukturisomerer syn- und anti-Formen auftreten, eignen sich deren Schmelz- bzw. Siedebereiche wenig zur Identifizierung, es sei denn, man hat die Strukturisomeren zuvor getrennt. Von den jeweils hergestellten Stoffen werden daher in folgenden Ergebnissen der Elementaranalyse und IR-Spektren mit typischen Absorptionsmaxima aus dem sog. "fingerprint"-Bereich zwischen 1 500 $cm^{-1}$ und 800 $cm^{-1}$ angegeben.

Beispiel 1

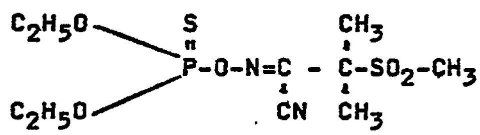

7,22 g 2-Hydroximino-3-methylsulfonyl-3-methylbutyronitril und 2,7 g gepulvertes Kaliumcarbonat werden in 40 ml Acetonitril gelöst bzw. suspendiert und unter Rühren tropfenweise mit 7,52 g Thiophosphorsäure-0,0-diethylesterchlorid versetzt. Die Mischung wird 8 Stunden bei 60°C gerührt, abgekühlt und filtriert. Das Filtrat wird im Vakuum eingeengt, der Rückstand in Ether aufgenommen, dreimal mit Wasser gewaschen und vom Lösungsmittel befreit. Nach dem Andestillieren bei 80°C und 0,01 mbar verbleiben 11,6 g 0-(0,0-Diethylthiophosphoryl)-2-oximino-3-methylsulfonyl-3-methylbutyronitril als nahezu farbloses, viskoses Öl. Ausbeute 89 % der rechnerisch möglichen.

$C_{10}H_{19}N_2O_5PS_2$ (342)
ber.: C 35,1 H 5,6 N 8,2
gef.: C 35,5 H 5,6 N 8,2
Infrarotabsorptionen ($cm^{-1}$): 1312, 1163, 1131, 1107, 1021, 947, 904.

Die in der nachstehenden Tabelle aufgeführten Verbindungen wurden ebenfalls auf dem in Beispiel 1 beschriebenen Weg erhalten, soweit Infrarotabsorptionen zu ihrer Identifizierung vorliegen; andere Verbindungen, die der Formel (I) entsprechen, können auf die gleiche Weise unter entsprechender Abwandlung der Vorschriften nach der jeweils benötigten Menge und (wegen der besten Reaktionsbedingungen) gegebenenfalls nach einem Vorversuch erhalten werden.

Tabelle

| Bsp. Nr. | $R^1$ | $R^2$ | $R^3$ | X | Infrarotabsorptionen ($cm^{-1}$) |
|---|---|---|---|---|---|
| 2 | $C_2H_5$ | $C_2H_5$ | $CH_3$ | S | 1312, 1131, 1107, 1044, 1014, 947, 897 |
| 3 | $C_2H_5$ | $CH_3$ | $CH_3$ | S | 1311, 1131, 1107, 1034, 957, 912, 892 |
| 4 | $CH_3$ | $OCH_3$ | $CH_3$ | S | 1310, 1131, 1107, 1036, 950, 905 |
| 5 | $C_2H_5$ | S-n-$C_3H_7$ | $CH_3$ | S | 1312, 1131, 1107, 1019, 954, 845, 896 |
| 6 | $C_2H_5$ | $OC_2H_5$ | $CH_3$ | O | 1309, 1165, 1132, 1108, 1032, 943, 909 |
| 7 | $C_2H_5$ | S-sec.-$C_4H_9$ | $CH_3$ | S | 1313, 1131, 1107, 1019, 956, 896 |
| 8 | $C_2H_5$ | NH-i-$C_3H_7$ | $CH_3$ | O | 1312, 1256, 1165, 1130, 1108, 1045, 952, 906 |
| 9 | $C_2H_5$ | $OC_2H_5$ | $C_2H_5$ | S | 1106, 1045, 1022, 947, 904 |
| 10 | $C_2H_5$ | $C_2H_5$ | $C_2H_5$ | S | 1022, 1014, 947, 897 |
| 11 | $C_2H_5$ | $CH_3$ | $C_2H_5$ | S | 1105, 1035, 958, 911, 892 |
| 12 | $CH_3$ | $OCH_3$ | $C_2H_5$ | S | 1106, 1041, 950, 905, 866 |
| 13 | $C_2H_5$ | NH-i-$C_3H_7$ | $C_2H_5$ | O | 1311, 1260, 1128, 1105, 1042, 950 |

Herstellung eines typischen Vorproduktes

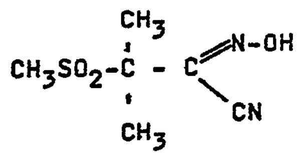

82,5 g 2-Methyl-(2-methylsulfonyl)propionaldoxim werden in 1,5 l Chloroform gelöst. Man erwärmt auf Rückflußtemperatur und leitet 44,4 g Chlorgas ein. Die Mischung wird noch 1 Stunde auf Siedetemperatur gehalten. Nach Entfernen des Lösungsmittels verbleiben 99,5 g des zugehörigen Hydroxamsäurechlorids als weiße Kristallmasse.

35,7 g gepulvertes Kaliumcyanid werden in 0,4 l Methanol suspendiert. Unter Eiskühlung fügt man eine Lösung des obigen Hydroxamsäurechlorids in 0,4 l Tetrahydrofuran hinzu. Man hält die Temperatur noch für 3 Stunden zwischen 0 und 5 °C, dann wird für 1 Stunde auf 35 °C erwärmt. Man saugt das Kaliumchlorid ab, engt das Filtrat am Rotationsverdampfer ein und kristallisiert den Rückstand aus einer Mischung Hexan/Essigester (3 : 1) um. Man erhält 49,5 g (52 % der theoretischen Menge) reines 2-Hydroximino-3-methylsulfonyl-3-methylbutyronitril als farblose Kristalle. Fp.: 139 bis 141°C.
Infrarotabsorptionen ($cm^{-1}$): 1320, 1282, 1125, 1109, 1028, 1014, 954

2-Hydroximino-3-ethylsulfonyl-3-methylbutyronitril wird in analoger Weise mit 59-prozentiger Ausbeute aus 2-Methyl-(2-ethylsulfonyl)propionaldoxim gewonnen. Fp.: 123-125°C
Infrarotabsorptionen ($cm^{-}$): 1420, 1294, 1125, 1101, 1020, 741

Die Phosphorsäureester der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Die Wirkstoffe können als solche, in Form ihrer Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Die Formulierungen enthalten im allgemeinen zwischen 0,1 und 95 Gew.-% Wirkstoff, vorzugsweise zwischen 0,5 und 90 Gew.-%.

Die Wirkstoffkonzentrationen in den anwendungsfertigen Zubereitungen können in größeren Bereichen variiert werden.

Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Anwendungsbeispiele:

In den nachfolgenden Beispielen dienten als Vergleichssubstanzen Verbindungen der Struktur I, II und/oder III:

I 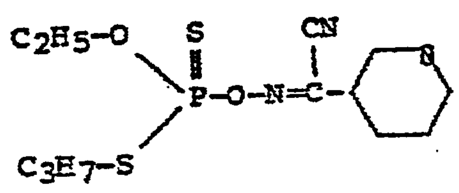

bekannt aus DE-OS 2 952 738

II 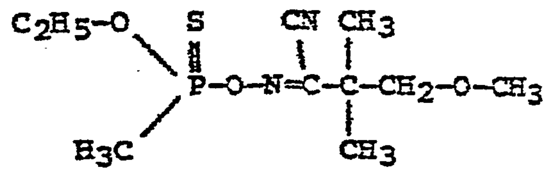

bekannt aus DE-OS 3 135 182 (≙ EP-A 0 074 047)

III 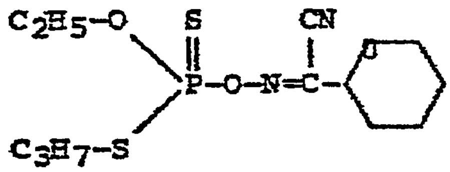

bekannt aus DE-OS 3 302 969.

Kontaktwirkung auf Schaben (Blatta orientalis)

Der Boden eines 1-l-Weckglases wird mit der acetonischen Lösung des Wirkstoffes behandelt.

Nach Verdunsten des Lösungsmittels setzt man je Glas 5 adulte Schaben.

Die Mortalitätsrate wird nach 48 Stunden bestimmt.

| | | | |
|---|---|---|---|
| Beispiel | 1 | 0,1 mg | 100% Mort. |
| Beispiel | 2 | 0,1 mg | 100% Mort. |
| Beispiel | 3 | 0,1 mg | 100% Mort. |
| Beispiel | 4 | 0,2 mg | 100% Mort. |
| Beispiel | 6 | 0,2 mg | 100% Mort. |
| Vergleich | I | 0,4 mg | 100% Mort. |
| Vergleich | II | 0,25 mg | 100% Mort. |

Dauerkontakt auf Stubenfliegen (Musca domestica)

Petrischalen mit 10 cm Durchmesser werden innen mit der acetonischen Lösung der Wirkstoffe behandelt.

Nach Verdunsten des Lösungsmittels besetzt man die Schalen mit 20 4-Tage alten Stubenfliegen.

Die Mortalität wird nach 4 Stunden ermittelt.

| | | | |
|---|---|---|---|
| Beispiel | 1 | 0,01 mg | 100% Mort. |
| Beispiel | 2 | 0,2 mg | 100% Mort. |
| Beispiel | 3 | 0,2 mg | 100% Mort. |
| Beispiel | 5 | 0,2 mg | 100% Mort. |
| Beispiel | 6 | 0,2 mg | 100% Mort. |
| Beispiel | 7 | 0,2 mg | 100% Mort. |
| Vergleich | I | 0,2 mg | 80% Mort. |

Kontaktwirkung auf Baumwollwanze (Dysdercus intermedius)

Petrischalen von 10 cm Durchmesser werden mit 1 ml der acetonischen Wirkstofflösung ausgekleidet.

Nach Verdunsten des Lösungsmittels besetzt man die Schalen mit je 20 Larven des vorletzten Stadiums und registriert die Wirkung nach 24 Stunden.

| | | | |
|---|---|---|---|
| Beispiel | 1 | 0,004 mg | 100% Mort. |
| Beispiel | 2 | 0,002 mg | 100% Mort. |
| Beispiel | 3 | 0,004 mg | 80% Mort. |
| Beispiel | 4 | 0,02 mg | 100% Mort. |
| Vergleich | I | 0,04 mg | 100% Mort. |
| Vergleich | II | 0,05 mg | 80% Mort. |
| Vergleich | III | 0,1 mg | 100% Mort. |

Plutella maculipennis; Kohlschaben-Raupen; Fraß- und Kontaktwirkung

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

| | | | |
|---|---|---|---|
| Beispiel | 1 | 0,004 mg | 100% Mort. |
| | | 0,002 mg | ca. 80% Mort. |
| Beispiel | 2 | 0,004 mg | ca. 80% Mort. |
| Beispiel | 3 | 0,004 mg | ca. 80% Mort. |
| Vergleich | I | 0,01 mg | ca. 80% Mort. |
| Vergleich | II | 0,02 mg | 100% Mort. |

Kontaktwirkung auf Blattläuse (Aphis fabae) Spritzversuch

Getopfte Bohnenpflanzen (Vicia faba) mit starken Blattlauskolonien werden in der Spritzkammer mit den wäßrigen Wirkstoffaufbereitungen tropfnaß gespritzt.

Die Auswertung erfolgt nach 24 Stunden.

| | | | |
|---|---|---|---|
| Beispiel | 1 | 0,02% | 100% Mort. |
| Beispiel | 2 | 0,004% | 100% Mort. |
| Vergleich | I | 0,1% | 100% Mort. |
| Vergleich | II | 0,1% | 60% Mort. |

Kontaktwirkung auf Zecken (Ornithodorus moubata)

Die Prüfung erfolgt an jungen Zecken, die erst einmal Blut aufgenommen haben. Je 5 Tiere werden in einem TEEFIX-Beutel 5 Sekunden in die wäßrige Wirkstoffaufbereitung getaucht. Der Beutel wird frei aufgehängt. Nach 48 Stunden ermittelt man die Mortalitätsrate.

Die Versuchstemperatur beträgt 25 - 26°C.

| | | | |
|---|---|---|---|
| Beispiel | 1 | 0,001% | 90% Mort. |
| Beispiel | 2 | 0,004% | 100% Mort. |
| Vergleich | I | 0,04% | 100% Mort. |
| | | 0,02% | 80% Mort. |
| Vergleich | II | 0,04% | 100% Mort. |
| | | 0,02% | 80% Mort. |
| Vergleich | III | 0,04% | 100% Mort. |
| | | 0,02% | 80% Mort. |

## Patentansprüche

1. Oximinophosphorsäurederivat der Formel I

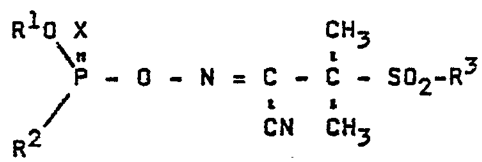 (I),

in der
$R^1$ eine unverzweigte oder verzweigte Alkylgruppe mit bis zu 4 Kohlenstoffatomen,
$R^2$ eine unverzweigte oder verzweigte Alkoxy- oder Alkylthiogruppe mit bis zu 4 Kohlenstoffatomen, eine unverzweigte oder verzweigte Alkylgruppe mit bis zu 3 Kohlenstoffatomen, Phenyl, die Aminogruppe oder einen unverzweigten oder verzweigten Alkylamino- oder Dialkylaminorest mit jeweils bis zu 4 Kohlenstoffatomen je Alkylgruppe,
$R^3$ Methyl oder Ethyl,
X Sauerstoff oder Schwefel bedeuten.

2. Verfahren zur Herstellung von Oximinophosphorsäurederivaten der Formel I gemäß Anspruch 1, dadurch gekennzeichnet, daß man ein α-Oximinonitril der Formel II

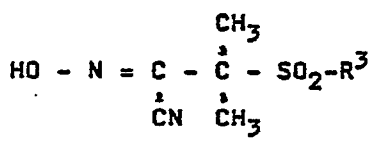 (II),

in der $R^3$ die in Anspruch 1 genannte Bedeutung hat, vorzugsweise in Gegenwart eines Säureacceptors oder Alkalimetall-, Erdalkalimetall- oder gegebenenfalls substituierte Ammoniumsalze dieser α-Oximinonitrile mit einem entsprechenden (Thio) (Thiol)Phosphor(Phosphon)säureester(amid)-halogenid der Formel III

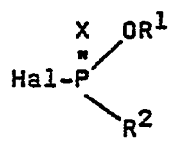 (III),

in der Hal für Halogen steht und X sowie die Reste $R^1$ und $R^2$ die in Anspruch 1 genannte Bedeutung haben, gegebenenfalls in Gegenwart eines Lösungs- oder Verdünnungsmittels bei Temperaturen zwischen 0 und 120°C umsetzt.

3. α-Oximinonitril der allgemeinen Formel II

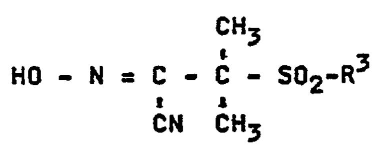 (II),

in der $R^3$ die in Anspruch 1 angegebene Bedeutung hat.

4. Schädlingsbekämpfungsmittel, enthaltend ein Oximinophosphorsäurederivat gemäß Anspruch 1.

5. Schädlingsbekämpfungsmittel, enthaltend einen festen oder flüssigen Trägerstoff und mindestens ein Oximinophosphorsäurederivat der Formel I gemäß Anspruch 1.

6. Verwendung von Oximinophosphorsäurederivaten der Formel I gemäß Anspruch 1 zur Bekämpfung von Schädlingen.

7. Verfahren zur Bekämpfung von Schädlingen, dadurch gekennzeichnet, daß man eine wirksame Menge des Oximinophosphorsäurederivates gemäß Anspruch 1 auf Schädlinge bzw. deren Lebensraum einwirken läßt.

## Claims

1. An oximinophosphoric acid derivative of the formula I

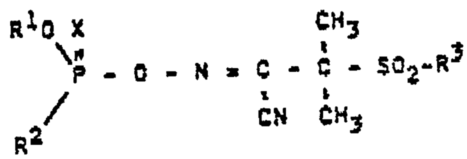 (I)

where $R^1$ is straight-chain or branched alkyl of not more than 4 carbon atoms, $R^2$ is a straight-chain or branched alkoxy or alkylthio group of not more than 4 carbon atoms, straight-chain or branched alkyl of not more than 3 carbon atoms, phenyl, amino or a straight-chain or branched alkylamino or dialkylamino radical where alkyl in each case is of not more than 4 carbon atoms, $R^3$ is methyl or ethyl and X is oxygen or sulfur.

2. A process for the preparation of oximinophosphoric acid derivatives of the formula I according to claim 1, wherein an α-oximinonitrile of the formula II

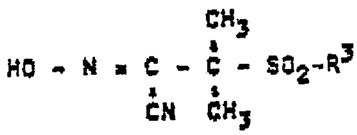 (II)

where $R^3$ has the meanings stated in claim 1, is reacted, preferably in the presence of an acid acceptor, or an alkali metal, alkaline earth metal or substituted or unsubstituted ammonium salt of such an α-oximinonitrile, with an appropriate (thio)(thiol) phosphoric (phosphonic) ester (amide) halide of the formula III

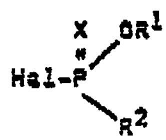 (III)

where Hal is halogen, and X, $R^1$ and $R^2$ have the meanings stated in claim 1, in the presence or absence of a solvent or diluent and at from 0° to 120°C.

3. An α-oximinonitrile of the general formula II

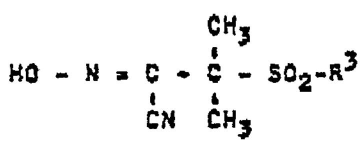 (II)

where $R^3$ has the meanings stated in claim 1.

4. A pesticide containing an oximinophosphoric acid derivative according to claim 1.

5. A pesticide containing a solid or liquid carrier and at least one oximinophosphoric acid derivative of the formula I according to claim 1.

6. Use of oximinophosphoric acid derivatives of the formula I according to claim 1 for controlling rests.

7. A method for controlling pests, wherein an effective amount of the oximinophosporic acid derivative according to claim 1 is allowed to act on the pests or their habitat.

## Revendications

1. Dérivé d'acide oximinophosphorique de formule I dans laquelle

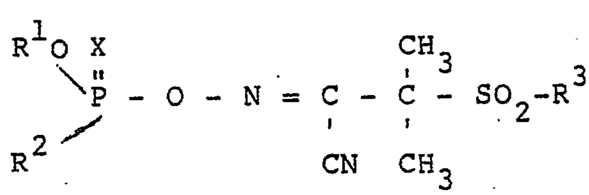 (I)

$R^1$ représente un groupe alkyle non ramifié ou ramifié ayant jusqu'à 4 atomes de carbone
$R^2$, un groupe alcoxy- ou alkylthio non ramifié ou ramifié, ayant jusqu'à 4 atomes de carbone, un groupe alkyle non ramifié ou ramifié, ayant jusqu'à 3 atomes de carbone, phényle, le groupe amino ou un reste alkylamino- ou dialkylamino, non ramifié ou ramifié ayant chacun jusqu'à 4 atomes de carbone par groupe alkyle.
$R^3$ représente méthyle ou éthyle
X, oxygène ou soufre.

2. Procédé de préparation de dérivés d'acide oximinophosphorique de formule I selon la revendication 1, caractérisé par le fait que l'on fait réagir, à des températures comprises entre 0 et 120°C, éventuellement en présence d'un solvant ou diluant, un α-oximinonitrile de formule II

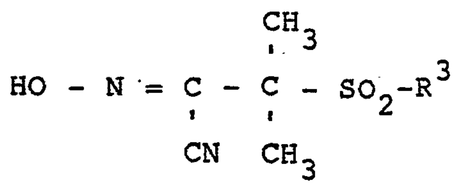

(II)

dans laquelle $R^3$ a la signification donnée dans la revendication 1, de préférence en présence d'un accepteur d'acide ou de sels de métal alcalin, de métal alcalinoterreux ou d'ammonium éventuellement substitués, de cet α-oximinonitrile, avec un halogènure d'ester (amide) d'acide (thio) (thiol) phosphorique (phosphonique) de formule III

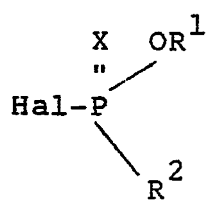

(III)

dans laquelle Hal est mis pour halogène et X ainsi que les restes $R^1$ et $R^2$ ont la signification donnée dans la revendication 1.

3. α-oximinonitrile de formule générale II

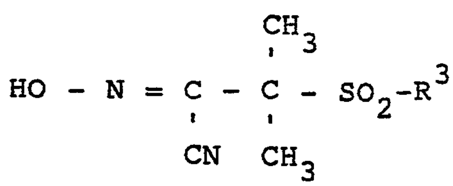

(II)

dans laquelle $R^3$ a la signification donnée dans la revendication 1.

4. Pesticide, contenant un dérivé d'acide oximinophosphorique de formule I dans la revendication 1.

5. Pesticide, contenant un support solide ou liquide et au moins un dérivé d'acide oximinophosphorique de formule I selon la revendication 1.

6. Utilisation de dérivés d'acide oximinophosphorique de formule I selon la revendication 1 pour lutter contre les parasites.

7. Procédé de lutte contre les parasites, caractérisé par le fait que l'on fait agir une quantité efficace de dérivé d'acide oximinophosphorique de formule I selon la revendication 1, sur les parasites ou leur biotope.